# EUROPÄISCHE PATENTSCHRIFT

(11) **EP 1 839 722 B1**
(45) Veröffentlichungstag und Bekanntmachung des Hinweises auf die Patenterteilung: **04.08.2010**
(21) Anmeldenummer: 06006325.2
(22) Anmeldetag: 27.03.2006
(51) Int. Cl.: B01D 45/16

(54) **Abscheidevorrichtung zum Abscheiden von Teilchen**
Separating device for separating particles
Dispositif de separation pour extraire des particules

(43) Veröffentlichungstag der Anmeldung: 03.10.2007
(73) Patentinhaber: SIEMENS AKTIENGESELLSCHAFT, 80333 München (DE)
(72) Erfinder: Kathol, Ulrich, 47447 Moers (DE); Naß, Dieter, 47447 Moers (DE); Schlüter, Lars, 47058 Duisburg (DE)

(56) Entgegenhaltungen:
- WO-A-93/11852
- DE-A1- 2 256 678
- DE-A1- 3 035 828
- DE-C- 385 945
- DE-C1- 19 651 857
- FR-A- 2 857 058
- US-A- 1 818 994
- US-A- 3 989 489

## Beschreibung

Die Erfindung betrifft eine Abscheidevorrichtung zum Abscheiden von Teilchen, insbesondere von Flüssigkeitströpfchen, aus einer die Teilchen enthaltenden Gasströmung mit einem die Gasströmung führenden Strömungskanal, welcher mindestens einen Umlenkbereich zum Umlenken der Gasströmung aufweist, und einem Aufnahmebehälter zum Aufnehmen der Teilchen, wobei der Strömungskanal weiterhin eine zu dem Aufnahmebehälter hinführende Abzweigung zum Abscheiden der Teilchen aus der Gasströmung aufweist.

Derartige Abscheidevorrichtungen können zum Abscheiden von festen Teilchen, wie etwa Staub oder Sand, sowie insbesondere zum Abscheiden von Teilchen in Gestalt von Flüssigkeitströpfchen verwendet werden. Abscheidevorrichtungen zum Abscheiden von Flüssigkeitströpfchen werden beispielsweise in Raffinerien der Petrochemie und insbesondere in Luftzerlegungsanlagen für technische Gase eingesetzt. Bei derartigen Anlagen sind Radialverdichterwellen aufweisende Verdichterstufen nacheinander angeordnet. Zwischen diese Verdichterstufen können Abscheidevorrichtungen der vorgenannten Art geschaltet werden. Damit kann einen Kühler der vorgeschalteten Verdichterstufe verlassendes komprimiertes feuchtes Gas, wie etwa komprimierte feuchte Luft, in die Abscheidevorrichtung eingeführt werden. Bei Taupunktsunterschreitung der Wasserkomponente ist mit einer gewissen Wassermenge und Tröpfchengröße in der eintretenden Gasströmung zu rechnen. Die Gasströmung folgt dem Umlenkbereich des Strömungskanals. Die Flüssigkeitströpfchen können aufgrund ihrer Trägheit dem Umlenkbereich nicht vollständig folgen und driften damit in Richtung des radial außen liegenden Wandbereichs des Strömungskanals. Die Flüssigkeitströpfen sollen dann über die Abzweigung in den Aufnahmebehälter gelangen.

Um einen Gasstau vor dem Aufnahmebehälter zu vermeiden, wird im Stand der Technik oft eigene motorbetriebene Absaugevorrichtungen am Aufnahmebehälter vorgesehen, die entsprechend kostspielig und aufwendig zu realisieren sind.

Aus der deutschen Patentschrift DE 38 59 45 ist bereits ein Abscheiden von festen oder flüssigen Bestandteilen aus Gasen oder Dämpfen bekannt, bei dem vor dem Eintritt in ein Verdichter das mit den Fremdkörpern beladene Gas umgelenkt wird und am Ende der Umlenkung auf dem Außenradius eine Abscheideöffnung vorgesehen ist, in die die Bestandteile der Strömung mit höherer Dichte eintreten. Da neben diesen abzuscheidenden Bestandteilen auch zu verdichtende Bestandteile des Gases durch die Abscheideöffnung hindurch treten, ist die sich anschließende Leitung mit einem Rezirkulationskanal versehen, so dass die von den Fremdkörpern befreiten Anteile des Gases stromaufwärts wieder in dem Fluidstrom eintreten können. Ein Nachteil der bekannten Anordnung ist die mangelnde Vorkehrung gegen Stauungsphänomene in der Leitung zur Abführung der Fremdstoffe. Insbesondere in dem Bereich des Anschlusses der Rezirkulationsleitung an die Abscheideleitung kann es zu Stauungen auf dem Weg zu einem Abscheidebehälter kommen, da keine Lösung offenbart ist, in dem Abscheidebehälter für eine Druckentlastung zu sorgen. Aus den Schriften DE 196 51 857, US 1,818,994, DE 2 256 678, DE 30 35 828 sind verschiedene Ausführungen von Rauchgasentstaubungsanlagen bekannt.

Ein Tropfenabscheider mit zwei Umlenkbereichen, Auffangbehälter und Verbindung zwischen Strömungskanal und Auffangbehälter ist aus der FR 2857058 bekannt.

Eine der Erfindung zugrundeliegende Aufgabe besteht darin, eine Abscheidevorrichtung der eingangs genannten Art dahingehend zu verbessern, dass eine bessere Abscheidung der Teilchen der Gasströmung ohne großen zusätzlichen Kostenaufwand erreicht werden kann.

Diese Aufgabe ist erfindungsgemäß mit einer gattungsgemäßen Abscheidevorrichtung gelöst, bei der der Strömungskanal einen bezüglich des ersten Umlenkbereichs stromabwärts angeordneten zweiten Umlenkbereich aufweist, mittels dessen eine Richtungsänderung der Gasströmung bewirkt wird, die einer durch den ersten Umlenkbereich bewirkten Richtungsänderung der Gasströmung entgegengesetzt ist und bei der der Strömungskanal einen bezüglich des ersten Umlenkbereichs stromaufwärts angeordneten dritten Umlenkbereich aufweist, mittels dessen eine Richtungsänderung der Gasströmung bewirkt wird, die einer durch den ersten Umlenkbereich bewirkten Richtungsänderung der Gasströmung entgegengesetzt ist. Damit besteht eine fluidleitende Verbindung einerseits zwischen dem Aufnahmebehälter und dem Strömungskanal über die Abzweigung des Strömungskanals und andererseits über die Leitung, die den Aufnahmebehälter ebenfalls mit dem Strömungskanal fluidleitend verbindet.

Damit wird ein automatischer Druckausgleich zwischen dem Aufnahmebehälter und dem Strömungskanal erreicht. Durch die Leitung kann sich ein "Belüftungsstrom" ausbilden. Die erfindungsgemäße Lösung ermöglicht damit, auf kosteneffiziente Art und Weise einen Gasstau im Strömungskanal im Bereich der Abzweigung zu vermeiden. Dadurch, dass die Leitung den Aufnahmebehälter fluidleitend mit dem Strömungskanal verbindet, ergibt sich durch die im Strömungskanal vorliegende Gasströmung insbesondere eine Saugwirkung im Aufnahmebehälter. Das heißt, das mit den Teilchen in den Aufnahmebehälter strömende Gas wird aufgrund dieser Saugwirkung von der Leitung angesaugt, Damit wird eine Gasstauung im Strömungskanal im Bereich der Abzweigung vermieden und somit die Abscheidung der Teilchen in den Aufnahmebehälter verbessert. Insbesondere mündet die Leitung sowohl in den Aufnahmebehälter als auch in den Strömungskanal. Die vorstehend beschriebene Saugwirkung kann sich damit noch besser entfalten. Durch die erfindungsgemäße fluidleitende Verbindung des Aufnahmebehälters mit dem Strömungskanal mittels der Leitung wird darüber hinaus die Notwendigkeit eines Einsatzes einer sperrigen und kostenintensiven Absaugevorrichtung vermieden.

In einer vorteilhaften Ausführungsform verbindet die Leitung den Aufnahmebehälter fluidleitend mit einem bezüglich der Abzweigung stromabwärts gelegenen Bereich des Strömungskanals. Das heißt, die Leitung stellt eine fluidleitende Verbindung mit einem Bereich des Strömungskanals her, den die Gasströmung erst nach dem Vorbeiströmen an der Abzweigung durchläuft. Durch diese Anordnung lässt sich die Leitung besonders kompakt ausführen. Damit kann eine besonders gute Saugwirkung im Aufnahmebehälter erzeugt werden.

Um die Belüftung möglichst wirkungsvoll zu gestalten, ist es vorteilhaft, wenn der Behälter einen ersten Wandbereich sowie einen diesem gegenüber liegenden zweiten Wandbereich aufweist, wobei die Abzweigung an dem ersten Wandbereich und die Leitung an dem zweiten Wandbereich in den Aufnahmebehälter einmündet. Damit weist der durch die Leitung ausgebildete "Belüftungsstrom" die gleiche Richtung auf wie der über die Abzweigung in den Aufnahmebehälter eintretende Gasstrom, wodurch ein Rückstau der Gasströmung im Bereich der Abzweigung besonders wirkungsvoll vermieden werden kann.

Es ist weiterhin vorteilhaft, wenn die Abzweigung im Umlenkbereich, insbesondere innenseitig an einem radial außen liegenden Wandbereich des Umlenkbereichs angeordnet ist. Damit lassen sich die Teilchen besonders wirkungsvoll aus der Gasströmung abscheiden, da sich diese aufgrund der Richtungsänderung des Strömungskanals im Umlenkbereich an den radial außen liegenden Wandbereich des Umlenkbereichs annähern. Durch Vorsehen der Abzweigung in diesem Bereich können die Teilchen besonders wirkungsvoll in den Aufnahmebehälter abgeschieden werden.

In einer darüber hinaus vorteilhaften Ausführungsform weist der Strömungskanal weiterhin einen bezüglich des Umlenkbereichs stromabwärts angeordneten zweiten Umlenkbereich auf, mittels dem eine Richtungsänderung der Gasströmung bewirkt wird, die einer durch den ersten Umlenkbereich bewirkten Richtungsänderung der Gasströmung entgegengesetzt ist. Damit kann dem Strömungskanal ein Verlauf gegeben werden, der den Aufnahmebehälter gewissermaßen von zwei Seiten her umfasst. Dies ermöglicht es, die Leitung zwischen dem Aufnahmebehälter und dem Strömungskanal besonders kompakt auszuführen, wodurch ein besonders wirkungsvoller Druckausgleich im Aufnahmebehälter ermöglicht wird. Weiterhin ist es vorteilhaft, wenn sich an den zweiten Umlenkbereich ein vierter Umlenkbereich anschließt, mittels dem eine weitere Richtungsänderung der Gasströmung bewirkt wird, die wiederum der durch den zweiten Umlenkbereich bewirkten Richtungsänderung der Gasströmung entgegengesetzt ist.

Darüber hinaus ist es zweckmäßig, wenn der erste Umlenkbereich des Strömungskanals im Wesentlichen eine U-Form beschreibt, und insbesondere eine Umlenkung des Gasstroms um etwa 180° bewirkt. Durch eine derartige Ausgestaltung des ersten Umlenkbereichs des Strömungskanals werden die abzuscheidenden Teilchen in großer Anzahl an den radial außen liegenden Wandbereich des ersten Umlenkbereichs gedrängt und können damit mittels der Abzweigung besonders wirkungsvoll in den Aufnahmebehälter abgeschieden werden.

Darüber hinaus ist es zweckmäßig, wenn die Abzweigung an einer Stelle des Umlenkbereichs angeordnet ist, an der die Richtung des Strömungskanals gegenüber der Richtung des Strömungskanals an einem einströmseitigen Beginn des Umlenkbereichs um mindestens 90° verschwenkt ist. Das heißt, die Abzweigung ist an einer Stelle des Umlenkbereichs angeordnet, an der der Umlenkbereich bereits eine Kurve von mindestens 90° vollzogen hat. An dieser Stelle sind die Teilchen schon in großer Anzahl am radial außen liegenden Wandbereich des Strömungskanals angeordnet und können damit wirkungsvoll in den Aufnahmebehälter abgezweigt werden.

Um die Wirksamkeit der Abscheidevorrichtung weiter zu verbessern, ist es vorteilhaft, wenn der Strömungskanal weiterhin einen bezüglich des ersten Umlenkbereichs stromaufwärts angeordneten dritten Umlenkbereich aufweist, mittels dem eine Richtungsänderung der Gasströmung bewirkt wird, die einer durch den ersten Umlenkbereich bewirkten Richtungsänderung der Gasströmung entgegengesetzt ist. Insbesondere weist der Strömungskanal zunächst einen in eine bestimmte Richtung gekrümmten dritten Umlenkbereich auf, woran sich der die Abzweigung enthaltende erste Umlenkbereich mit einer entgegengesetzten Krümmungsrichtung anschließt. Die Teilchen nähern sich damit aufgrund der Krümmung des dritten Umlenkbereichs an den radial außen liegenden Wandbereich des dritten Umlenkbereichs an. Die Teilchen können der erneuten Umlenkung durch den darauf folgenden ersten Umlenkbereich nicht entsprechend folgen und werden damit bei entsprechender Anordnung der Abzweigung am ersten Umlenkbereich wirkungsvoll vom Aufnahmebehälter aufgenommen.

In einer weiteren vorteilhaften Ausführungsform weist der Strömungskanal in einem bezüglich der Abzweigung stromabwärts gelegenen Bereich an mehreren Stellen, insbesondere an allen Stellen des Bereichs, entlang des Strömungskanals im Wesentlichen gleich große Querschnittsflächen auf. Insbesondere wird die Gasströmung nach Vorbeiströmen an der Abzweigung im Strömungskanal mit im Wesentlichen konstant bleibender Querschnittsfläche weitergeführt. Damit werden Strömungsverluste in der Gasströmung weitgehend vermieden.

Nachfolgend wird ein Ausführungsbeispiel einer erfindungsgemäßen Abscheidevorrichtung anhand der beigefügten schematischen Zeichnungen näher erläutert. Es zeigt:
- Fig. 1: eine Schnittansicht eines Ausführungsbeispiels der erfindungsgemäßen Abscheidevorrichtung, sowie
- Fig. 2: die Schnittansicht gemäß Fig. 1 mit einer graphischen Darstellung der in der Abscheidevorrichtung vorliegenden Verteilung von Wassertröpfchen im Betrieb der Abscheidevorrichtung.

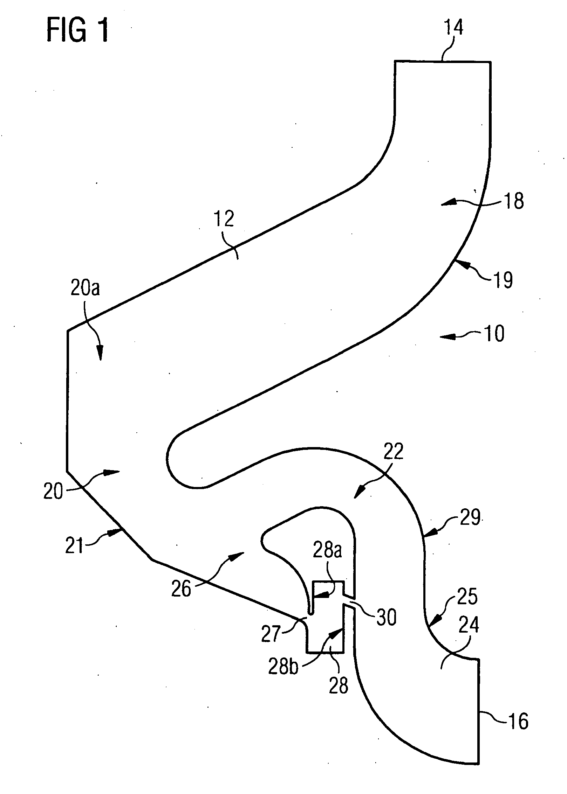

Das in Fig. 1 dargestellte Ausführungsbeispiel der erfindungsgemäßen Abscheidevorrichtung 10 umfasst einen Strömungskanal 12, der sich zwischen einem Einlass 14 und einem Auslass 16 erstreckt. Der Einlass 14 kann an einen Kühler einer nicht graphisch dargestellten Verdichterstufe beispielsweise einer Luftzerlegungsanlage angeschlossen werden und nimmt im Betrieb den Kühler verlassendes komprimiertes feuchtes Gas in Form von komprimierter feuchter Luft auf. An dem Auslass 16 kann eine weitere Verdichterstufe einer Luftzerlegungsanlage angeordnet werden.

Die komprimierte feuchte Luft enthält eine Vielzahl von Flüssigkeitströpfchen unterschiedlichen Durchmessers. Der Strömungskanal 12 weist zunächst einen sich an den Einlass 14 anschließenden, nach rechts gekrümmten dritten Umlenkbereich 18, der eine Richtungsänderung des Strömungskanals 12 um etwa 60° bewirkt, auf. Daran schließt sich ein im Wesentlichen eine U-Form beschreibender und nach links gekrümmter erster Umlenkbereich 20 an. An einem radial außen liegenden Wandbereich 21 des ersten Umlenkbereichs 20 ist eine Abzweigung 26 vorgesehen, die in einen ersten Wandbereich 28a eines Aufnahmebehälter 28 bzw. einer so genannten Wasserkammer mündet. Die Abzweigung 26 ist als eine sich im Querschnitt stetig verengende Leitung ausgebildet und an einer Stelle des ersten Umlenkbereichs 20 angeordnet, an der die Richtung des Strömungskanals 12 gegenüber der Richtung des Strömungskanals 12 am einströmseitigen Beginn 20a des ersten Umlenkbereichs 20 um mehr als 90° verschwenkt ist.

Der Strömungskanal 12 weist anschließend an den linksgekrümmten ersten Umlenkbereich 20 einen eine Richtungsänderung des Strömungskanals 12 um einen Winkel von etwa 135° bewirkenden rechtsgekrümmten zweiten Umlenkbereich 22 auf. Daran schließt sich wiederum ein eine Richtungsänderung der Strömungskanals 12 um einen Winkel von etwa 90° bewirkender linksgekrümmter vierter Umlenkbereich 24 an. Der Aufnahmebehälter 28 ist über eine Leitung 30 mit dem bezüglich der Abzweigung 26 stromabwärts gelegenen Bereich 29 des Strömungskanals 12 fluidleitend verbunden. Die Leitung 30 mündet einerseits in einen dem ersten Wandbereich 28a des Aufnahmebehälters 28 gegenüberliegenden zweiten Wandbereich 28b und andererseits in einen Übergangsbereich zwischen dem zweiten Umlenkbereich 22 und dem vierten Umlenkbereich 24 in den Strömungskanal 12 ein. Die Leitung 30 dient dem automatischen Druckausgleich des Aufnahmebehälters 28. Damit wird ein Luftstau im Strömungskanal 12 im Bereich der Abzweigung 26 vermieden.

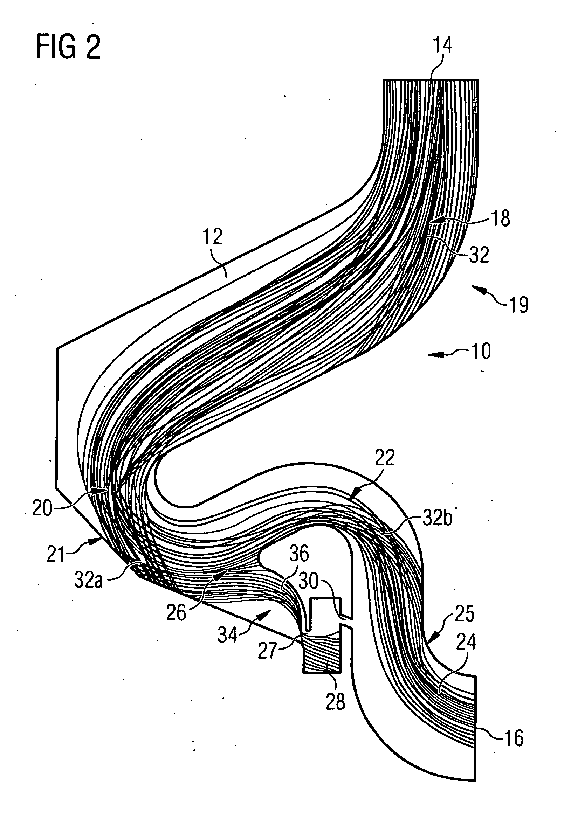

Fig. 2 zeigt eine Verteilung von Flüssigkeitströpfchen 32 in Form von Wassertröpfchen in der durch die Abscheidevorrichtung 10 geleitenden Gas- bzw. Luftströmung. Wie aus Fig. 2 entnehmbar, werden die Flüssigkeitströpfchen 32 durch den rechtsgekrümmten dritten Umlenkbereich 18 zunächst an einen radial außen liegenden Wandbereich 19 des dritten Umlenkbereichs 18 herangeführt. Durch den sich daran anschließenden linksgekrümmten ersten Umlenkbereich 20 werden die Flüssigkeitströpfchen 32 dann an den radial außen liegenden Wandbereich 21 des ersten Umlenkbereichs 20 des Strömungskanals 12 geführt. Daraufhin werden die Flüssigkeitströpfchen 32 in großer Anzahl über die Abzweigung 26 in den Aufnahmebehälter 28 abgeschieden. Dabei handelt es sich bei den abgeschiedenen Flüssigkeitströpfchen 32 hauptsächlich um schwere Flüssigkeitströpfchen 32a mit einem großen Durchmesser. Leichte Flüssigkeitströpfchen 32b mit einem kleineren Durchmesser werden mit der Luftströmung in den zweiten Umlenkbereich 22 des Strömungskanals 12 mitgerissen.

Im Bereich der Abzweigung 26 bildet sich ein Rezirkulationsgebiet 34 aus, sodass die Flüssigkeitströpfchen 32 in einem schmalen Strömungspfad 36 oberhalb des Rezirkulationsgebiets 34 in einem spitzen Winkel in den Aufnahmebehälter 28 eintreten. Im Aufnahmebehälter 28 setzen sich die Flüssigkeitströpfchen 32 in dessen unterem Bereich ab. Die von der Luftströmung mitgerissenen leichten Flüssigkeitströpfchen 32b werden nach Vorbeiströmen an der Abzweigung 26 durch die aufeinander folgende Anordnung des zweiten Umlenkbereichs 22 und des vierten Umlenkbereichs 24 zu dem radial innen liegenden Wandbereich 25 des vierten Umlenkbereichs 24 hingedrängt.

### Bezugszeichenliste

- 10: Abscheidevorrichtung
- 12: Strömungskanal
- 14: Einlass
- 16: Auslass
- 18: dritter Umlenkbereich
- 19: radial außen liegender Wandbereich
- 20: erster Umlenkbereich
- 20a: Beginn des ersten Umlenkbereichs
- 21: radial außen liegender Wandbereich
- 22: zweiter Umlenkbereich
- 24: vierter Umlenkbereich
- 25: radial innen liegender Wandbereich
- 26: Abzweigung
- 27: Einmündung
- 28: Aufnahmebehälter
- 28a: erster Wandbereich
- 28b: zweiter Wandbereich
- 29: Bereich des Strömungskanals
- 30: Leitung
- 32: Flüssigkeitströpfchen
- 32a: schwere Flüssigkeitströpfchen
- 32b: leichte Flüssigkeitströpfchen
- 34: Rezirkulationsgebiet
- 36: Strömungspfad

## Patentansprüche

1. Abscheidevorrichtung (10) zum Abscheiden von Teilchen (32), insbesondere von Flüssigkeitströpfchen, aus einer die Teilchen (32) enthaltenden Gasströmung mit einem die Gasströmung führenden Strömungskanal (12), welcher mindestens einen Umlenkbereich (20) zum Umlenken der Gasströmung aufweist, und einem Aufnahmebehälter (28) zum Aufnehmen der Teilchen (32), wobei der Strömungskanal (12) weiterhin eine zu dem Aufnahmebehälter (28) hinführende Abzweigung (26) zum Abscheiden der Teilchen (32) aus der Gasströmung aufweist, die an einem radial außen liegenden Wandbereich (21) des Umlenkbereichs (20) vorgesehen ist,
wobei zusätzlich zu der Abzweigung (26) eine Leitung (30) zu dem Aufnahmebehälter (28) hinführt, die den Aufnahmebehälter (28)derart fluidleitend mit dem Strömungskanal (12) verbindet, dass sich durch die im Strömungskanal vorliegende Gasströmung eine Saugwirkung im Aufnahmebehälter ergibt **dadurch gekennzeichnet, dass**
der Strömungskanal (12) einen bezüglich des ersten Umlenkbereichs (20) stromabwärts angeordneten zweiten Umlenkbereich (22) aufweist, mittels dessen eine Richtungsänderung der Gasströmung bewirkt wird, die einer durch den ersten Umlenkbereich (20) bewirkten Richtungsänderung der Gasströmung entgegengesetzt ist und dass der Strömungskanal (12) einen bezüglich des ersten Umlenkbereichs (20) stromaufwärts angeordneten dritten Umlenkbereich (18) aufweist, mittels dessen eine Richtungsänderung der Gasströmung bewirkt wird, die einer durch den ersten Umlenkbereich bewirkten Richtungsänderung der Gasströmung entgegengesetzt ist.

2. Abscheidevorrichtung nach Anspruch 1,
**dadurch gekennzeichnet, dass** die Leitung (30) den Aufnahmebehälter (28) fluidleitend mit einem bezüglich der Abzweigung (26) stromabwärts gelegenen Bereich (29) des Strömungskanals (12) verbindet.

3. Abscheidevorrichtung nach Anspruch 1 oder 2,
**dadurch gekennzeichnet, dass** der Aufnahmebehälter (28) einen ersten Wandbereich (28a) sowie einen diesem gegenüber liegenden zweiten Wandbereich (28b) aufweist, wobei die Abzweigung (26) an dem ersten Wandbereich (28a) und die Leitung (30) an dem zweiten Wandbereich (28b) in den Aufnahmebehälter (28) einmündet.

4. Abscheidevorrichtung nach einem der vorausgehenden Ansprüche,
**dadurch gekennzeichnet, dass** die Abzweigung (26) am Umlenkbereich (20), insbesondere innenseitig an einem radial außen liegenden Wandbereich (21) des Umlenkbereichs (20) angeordnet ist.

5. Abscheidevorrichtung nach einem der vorausgehenden Ansprüche,
**dadurch gekennzeichnet, dass** der Umlenkbereich (20) des Strömungskanals (12) im Wesentlichen eine U-Form beschreibt, und insbesondere eine Umlenkung des Gasstroms um etwa 180° bewirkt.

6. Abscheidevorrichtung nach einem der vorausgehenden Ansprüche,
**dadurch gekennzeichnet, dass** die Abzweigung (26) an einer Stelle des Umlenkbereichs (20) angeordnet ist, an der die Richtung des Strömungskanals (12) gegenüber der Richtung des Strömungskanals (12) an einem einströmseitigen Beginn (20a) des Umlenkbereichs (20) um mindestens 90° verschwenkt ist.

7. Abscheidevorrichtung nach einem der vorausgehenden Ansprüche,
**dadurch gekennzeichnet, dass** der Strömungskanal (12) einen bezüglich des ersten Umlenkbereichs (20) stromaufwärts angeordneten dritten Umlenkbereich (18) aufweist, mittels dem eine Richtungsänderung der Gasströmung bewirkt wird, die einer durch den ersten Umlenkbereich bewirkten Richtungsänderung der Gasströmung entgegengesetzt ist.

8. Abscheidevorrichtung nach einem der vorausgehenden Ansprüche,
**dadurch gekennzeichnet, dass** der Strömungskanal (12) in einem bezüglich der Abzweigung (26) stromabwärts gelegen Bereich (29) an mehreren Stellen, insbesondere an allen Stellen des Bereichs (29), entlang des Strömungskanals (12) im Wesentlichen gleich große Querschnittsflächen aufweist.

## Claims

1. Separating device (10) for separating out particles (32), especially liquid droplets, from a gas flow which contains the particles (32), with a flow passage (12) which guides the gas flow and which has at least one deflecting region (20) for deflecting the gas flow, and with a collecting vessel (28) for receiving the particles (32), wherein the flow passage (12) furthermore has a branch (26), which leads to the collecting vessel (28), for separating out the particles (32) from the gas flow, and which is provided on a radially outwardly lying wall section (21) of the deflecting region (20),
wherein in addition to the branch (26) a pipe (30) leads to the collecting vessel (28) and connects the collecting vessel (28) in a fluid-directing manner to the flow passage (12) in such a way that a suction effect is created in the collecting vessel as a result of the gas flow which is present in the flow passage, **characterized in that** the flow passage (12) has a second deflecting region (22) which is arranged downstream with regard to the first deflecting region (20), by means of which a change of direction of the gas flow is brought about which is opposite to a change of direction of the gas flow which is brought about by means of the first deflecting region (20), and that the flow passage (12) has a third deflecting region (18) which is arranged upstream with regard to the first deflecting region (20), by means of which a change of direction of the gas flow is brought about which is opposite to a change of direction of the gas flow which is brought about by means of the first deflecting region.

2. Separating device according to Claim 1,
**characterized in that** the pipe (30) connects the collecting vessel (28) in a fluid-directing manner to a region (29) of the flow passage (12) which is located downstream with regard to the branch (26).

3. Separating device according to either of Claims 1 or 2, **characterized in that** the collecting vessel (28) has a first wall section (28a) and also a second wall section (28b) which lies opposite this, wherein the branch (26) leads to the collecting vessel (28) on the first wall section (28a) and the pipe (30) leads to the collecting vessel (28) on the second wall section (28b).

4. Separating device according to one of the preceding claims, **characterized in that** the branch (26) is arranged at the deflecting region (20), especially on the inner side on a radially outwardly lying wall section (21) of the deflecting region (20).

5. Separating device according to one of the preceding claims,
**characterized in that** the deflecting region (20) of the flow passage (12) describes essentially a U-shape, and especially brings about a deflection of the gas flow by about 180°.

6. Separating device according to one of the preceding claims,
**characterized in that** the branch (26) is arranged at a point of the deflecting region (20) at which the direction of the flow passage (12) is rotated by at least 90° in relation to the direction of the flow passage (12) at a start (20a) of the deflecting region (20) on the inflow side.

7. Separating device according to one of the preceding claims,
**characterized in that** the flow passage (12) has a third deflecting region (18) which is arranged upstream with regard to the first deflecting region (20), by means of which a change of direction of the gas flow is brought about which is opposite to a change of direction of the gas flow which is brought about by means of the first deflecting region.

8. Separating device according to one of the preceding claims,
**characterized in that** the flow passage (12), in a region (29) which is located downstream with regard to the branch (26), has cross-sectional areas of essentially equal size along the flow passage (12) at a plurality of points, especially at all points of the region (29).

## Revendications

1. Dispositif ( 10 ) de séparation pour séparer des particules ( 32 ), notamment des gouttelettes de liquide, d'un courant gazeux contenant les gouttelettes ( 32 ), comprenant un canal ( 12 ) d'écoulement guidant le courant gazeux et ayant au moins une partie ( 20 ) de déviation pour dévier le courant gazeux, et un récipient ( 28 ) de réception pour recevoir les particules ( 32 ), le canal ( 12 ) d'écoulement ayant en outre une bifurcation ( 26 ) menant au récipient ( 28 ) de réception pour la séparation des particules ( 32 ) du courant gazeux, bifurcation qui est prévue sur une partie ( 21 ) de paroi se trouvant à l'extérieur radialement de la partie ( 20 ) de déviation,
dans lequel, en plus de la bifurcation ( 26 ), un conduit ( 30 ) mène au récipient ( 28 ) de réception et fait communiquer le récipient ( 28 ) de réception fluidiquement avec le canal ( 12 ) d'écoulement, de manière à ce que le courant gazeux présent dans le canal d'écoulement donne un effet d'aspiration dans le récipient de réception,
**caractérisé en ce que**
le canal ( 12 ) d'écoulement a une deuxième partie ( 22 ) de déviation, qui est disposée en aval de la première partie ( 20 ) de déviation et au moyen de laquelle il est provoqué une modification de la direction du courant gazeux qui est opposée à la modification de direction du courant gazeux provoquée par la première partie ( 20 ) de déviation et **en ce que** le canal ( 12 ) d'écoulement a une troisième partie ( 18 ) de déviation, qui est disposée en amont de la première partie ( 20 ) de déviation et au moyen de laquelle il est provoqué une modification de la direction du courant gazeux qui est opposée à une modification de direction du courant gazeux, provoquée par la première partie de déviation.

2. Dispositif de séparation suivant la revendication 1, **caractérisé en ce que**
le conduit ( 30 ) met en communication le récipient ( 28 ) de réception fluidiquement avec une partie ( 29 ) du canal ( 12 ) d'écoulement en aval de la bifurcation ( 26 ).

3. Dispositif de séparation suivant la revendication 1 ou 2, **caractérisé en ce que**
le récipient ( 28 ) de réception a une première partie ( 28 ) de paroi, ainsi qu'une deuxième partie ( 28b ) de paroi opposée à celle-ci, la bifurcation ( 26 ) débouchant dans le récipient ( 28 ) de réception sur la première ( 28a ) de paroi et le conduit ( 30 ) sur la deuxième partie ( 28b ) de paroi.

4. Dispositif de séparation suivant l'une des revendications précédentes,
**caractérisé en ce que**
la bifurcation ( 26 ) est disposée dans la partie ( 20 ) de déviation, notamment du côté intérieur sur une partie ( 21 ) de paroi de la partie ( 20 ) de déviation se trouvant à l'extérieur radialement.

5. Dispositif de séparation suivant l'une des revendications précédentes,
**caractérisé en ce que**
la partie ( 20 ) de déviation du canal ( 12 ) d'écoulement décrit sensiblement une forme en U et provoque notamment une déviation du courant gazeux d'environ 180°.

6. Dispositif de séparation suivant l'une des revendications précédentes,
**caractérisé en ce que**
la bifurcation ( 26 ) est disposée en un point de la partie ( 20 ) de déviation, où la direction du canal ( 12 ) d'écoulement est basculée d'au moins 90° par rapport à la direction du canal ( 12 ) d'écoulement en un début ( 20a ) du côté de l'admission de la partie ( 20 ) de déviation.

7. Dispositif de séparation suivant l'une des revendications précédentes,
**caractérisé en ce que**
le canal ( 12 ) d'écoulement a une troisième partie ( 18 ) de déviation, qui est disposée en amont de la première partie ( 20 ) de déviation et au moyen de laquelle il est provoqué une modification de la direction du courant gazeux, qui est opposée à la modification de la direction du courant gazeux provoquée par la première partie de déviation.

8. Dispositif de séparation suivant l'une des revendications précédentes,
**caractérisé en ce que**
le canal ( 12 ) d'écoulement a, dans une partie ( 29 ) en aval de la bifurcation ( 28 ), en plusieurs points, notamment en tous les points de la partie ( 29 ), des surfaces de section transversale sensiblement de même dimension le long du canal ( 12 ) d'écoulement.
